# EUROPÄISCHE PATENTSCHRIFT

(11) **EP 0 447 614 B1**
(45) Veröffentlichungstag und Bekanntmachung des Hinweises auf die Patenterteilung: **04.10.1995**
(21) Anmeldenummer: 90120627.6
(22) Anmeldetag: 27.10.1990
(51) Int. Cl.: H04B 1/18, H04B 1/48, H01Q 5/00, H01Q 1/32

(54) **Antennenweiche**
Antenna duplexer
Duplexeur d'antenne

(30) Priorität: 17.03.1990 DE 4008632
(43) Veröffentlichungstag der Anmeldung: 25.09.1991
(73) Patentinhaber: ROBERT BOSCH GMBH, 70442 Stuttgart (DE)
(72) Erfinder: Dörrie, Horst, W-1000 Berlin 21 (DE); Militz, Uwe, Dipl.-Ing., W-1000 Berlin 41 (DE)

(56) Entgegenhaltungen:
- DE-A- 2 153 630
- DE-A- 3 844 541
- DE-C- 2 167 276

## Beschreibung

Die Erfindung betrifft eine Antennenweiche nach dem Oberbegriff des Anspruchs 1.

### Stand der Technik

Es ist schon eine derartige Antennenweiche bekannt (Elektor, 1980, Heft 4, Seiten 59 bis 61), mit welcher eine in einem Fahrzeug eingebaute 27-MHz-CB-Funkstation und ein Autoradio an eine gemeinsame Fahrzeugantenne angeschlossen und betrieben werden können. Die bekannte Antennenweiche hat den Nachteil, daß sie als passive Antennenweiche nicht für den Anschluß eines tragbaren Hochfrequenzsende- und -empfangsgerätes geringer Leistung, also zum Beispiel eines in der Hand zu-haltenden Handsprechfunkgerätes, anstelle der CB-Funkstation geeignet ist.

### Aufgabe

Der Erfindung liegt die Aufgabe zugrunde, eine Antennenweiche gemäß dem Oberbegriff des Anspruchs 1 derart weiterzubilden, daß mit ihr ein Autoradio und ein Hochfrequenzsende- und -empfangsgerät kleiner Leistung an einer gemeinsamen Antenne betrieben werden können und daß diese Antennenweiche einen vergleichsweise einfachen Aufbau hat.

### Beschreibung

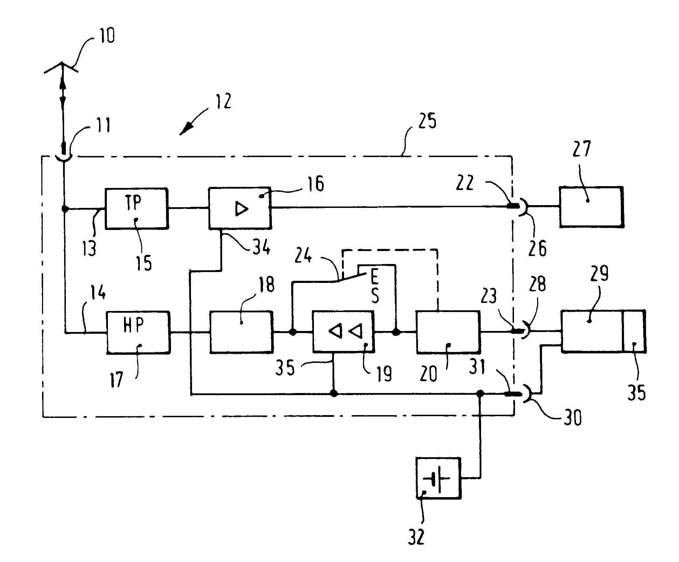

Ein Ausführungsbeispiel der Erfindung ist in der Zeichnung anhand einer einzigen Figur dargestellt und wird im folgenden näher beschrieben. Die Figur zeigt ein Blockschaltbild der Antennenweiche.

In der Figur bezeichnet 10 eine Fahrzeugantenne für den Hörrundfunkempfang (zum Beispiel LMKU) und für das Senden und Empfangen von Funksignalen in einem oberhalb des Hörrundfunk-Frequenzbereiches liegenden Funkfrequenzbereich.

Die Fahrzeugantenne 10 ist mit einem ersten Anschluß 11 einer aktiven Antennenweiche 12 verbunden. An den ersten Anschluß schließen sich zwei parallele Stromzweige 13 und 14 an, von denen der erste Stromzweig 13 eine Reihenschaltung aus einem Tiefpaßfilter 15 und einem ersten Hochfrequenzverstärker 16 und der zweite Stromzweig 14 eine Reihenschaltung aus einem Hochpaßfilter 17, einem Filter 18, einem zweiten Hochfrequenzverstärker 19 und einer Schaltvorrichtung 20 aufweist. Der erste Hochfrequenzverstärker 16 ist mit einem zweiten Anschluß 22, das ist vorzugsweise ein Steckverbinderteil, und die Schaltvorrichtung 20 mit einem dritten Anschluß 23, das ist vorzugsweise ein weiteres Steckverbinderteil, verbunden. Zu der Schaltvorrichtung 20 gehört ein Schalter 24, mit dem der zweite Hochfrequenzverstärker 19 überbrückt werden kann.

Die Baustufen 15 bis 24 sind vorzugsweise in einem gemeinsamen Abschirmgehäuse untergebracht, das in der Figur durch strichpunktierte Linien 25 angedeutet ist.

Das Steckverbinderteil 22 korrespondiert mit einem Steckverbinderteil 26, welches mit dem Antenneneingang eines Autoradios 27 verbunden ist. Das Steckverbinderteil 23 korrespondiert mit einem Steckverbinderteil 28, welches mit dem Antennenanschluß eines Funksende- und -empfangsgerätes 29 geringer Sendeleistung, das ist vorzugsweise ein Handfunksende- und -empfangsgerät, verbunden ist.

Das Handfunksende- und -empfangsgerät 29 weist noch ein Steckverbinderteil 30 auf, das beispielsweise über einen vierten Anschluß 31 in Form eines weiteren Steckverbinderteils der Antennenweiche 12 mit dem Pluspol einer Fahrzeugbatterie 32 verbunden ist. Das weitere Steckverbinderteil 31 steht mit Stromversorgungsanschlüssen 33, 34 der Hochfrequenzverstärker 19 und 16 in Verbindung.

Die Wirkungsweise der vorstehend beschriebenen Antennenweiche ist folgende.

Mit der Fahrzeugantenne 10 empfangene Hörrundfunksignale gelangen über das Tiefpaßfilter 15, dessen Grenzfrequenz bei etwa 108 MHz liegt, an den Eingang des ersten Hochfrequenzverstärkers 16 und werden in diesem verstärkt und über die Steckverbinderteile 22, 26 dem Antenneneingang des Autoradios 27 zugeführt. Das Hochpaßfilter 17, dessen Grenzfrequenz ebenfalls bei etwa 108 MHz liegt, verhindert, daß die Hörrundfunksignale den zweiten Stromweg 14 passieren.

Mit der Fahrzeugantenne 10 aufgenommene Funkempfangssignale, die zum Beispiel in einem Frequenzbereich von 400 MHz liegen, werden durch das Tiefpaßfilter 15 von dem ersten Stromzweig 13 ferngehalten. Diese Signale gelangen über das Hochpaßfilter 17 und das Filter 18, das zur Verhinderung von Interkanalmodulationsstörungen vorgesehen ist, unter Umgehung des zweiten Hochfrequenzverstärkers 19 - der Schalter 24 ist bei Empfangsbetrieb des Handfunksende- und -empfangsgerätes 29 geschlossen - über die Schaltvorrichtung 20 und die Steckverbinderteile 23 und 28 an den Antennenanschluß des Handfunksende- und -empfangsgerätes 29.

Wird das Handfunksende- und -empfangsgerät 29 auf Senden geschaltet, dann bewirkt die im Vergleich zu einem Kraftfahrzeugfunksende- und -empfangsgerät geringe Sendeenergie, daß die Schaltvorrichtung 20 anspricht und der Schalter 24 geöffnet wird. Damit verstärkt der zweite Hochfrequenzverstärker 19 die Sendesignale des Handfunksende- und -empfangsgerätes auf einen Wert, der der üblichen Sendeleistung eines Kraftfahrzeugfunksende- und -empfangsgerätes entspricht. Das Filter 18 leitet die verstärkten Hochfrequenzsignale über das Hochpaßfilter 17 an die Fahrzeugantenne 10. In diesem Fall hält das Tiefpaßfilter 15 die Sendesignale von dem ersten Stromzweig 13 fern.

Die Stromversorgung für das Handfunksende- und -empfangsgerät 29 erfolgt bei außerhalb des Fahrzeuges verwendetem Handfunksende- und -empfangsgerät durch eine in dem Gerät enthaltene Stromquelle 35. Bei in dem Fahrzeug betriebenem Handfunksende- und -empfangsgerät erfolgt dessen Stromversorgung vorzugsweise unter Abschaltung der internen Stromquelle 35 aus der Fahrzeugbatterie 32, wobei das Gerät vorzugsweise in einer mechanischen Halterung, die auch die Antennenweiche 12 aufnimmt, lösbar befestigt ist. Wird das Handfunksende- und -empfangsgerät 29 in die Halterung eingeschoben, so stellen die Steckverbinderteile 30, 31 die elektrische Verbindung zu der Fahrzeugbatterie 32 und die Steckverbinderteile 23 und 28 die elektrische Verbindung von dem Antennenanschluß des Handfunksende- und -empfangsgerätes 29 zu der Schaltvorrichtung 20 her.

## Patentansprüche

1. Antennenweiche (12), deren erster, mit einer Fahrzeugantenne (10) verbundener Anschluß (11) über ein Tiefpaßfilter (15) mit einem zweiten Anschluß (22) der Antennenweiche zum Anschließen eines Hochfrequenzempfängers (27) für einen tieferen Frequenzbereich sowie über ein Hochpaßfilter (17) mit einem dritten Anschluß (23) der Antennenweiche (10) verbunden ist, an den ein Funksende- und -empfangsgerät (29) für einen höheren Frequenzbereich angeschlossen ist, **dadurch gekennzeichnet,** daß zwischen dem Hochfrequenzempfänger (27) und dem Tiefpaßfilter (15) ein erster Hochfrequenzverstärker (16) und zwischen dem eine verhältnismäßig geringe Sendeleistung aufweisenden Funksende- und -empfangsgerät (29) und dem Hochpaßfilter (17) eine Reihenschaltung aus einer Schaltvorrichtung (20) und einem durch die Schaltvorrichtung überbrückbaren zweiten Hochfrequenzverstärker (19) angeordnet ist.

2. Antennenweiche nach Anspruch 1, dadurch gekennzeichnet, daß die Schaltvorrichtung (20) ein Hochfrequenz-Stromrelais ist, dessen Schalter (24) bei im Empfangsbetrieb arbeitendem Funksende- und -empfangsgerät (29) den zweiten Hochfrequenzverstärker (19) überbrückt.

3. Antennenweiche nach Anspruch 1 oder 2, dadurch gekennzeichnet, daß das Funksende- und -empfangsgerät (29) ein Handfunksende- und -empfangsgerät ist, welches über eine lösbare elektrische Verbindung (23, 28) mit dem dritten Anschluß (23) der Antennenweiche (12) verbunden ist.

4. Antennenweiche nach Anspruch 1, dadurch gekennzeichnet, daß zwischen dem Hochpaßfilter (17) und dem zweiten Hochfrequenzverstärker (19) ein weiteres Filter (18) zur Vermeidung der Interkanalmodulation vorgesehen ist.

5. Antennenweiche nach Anspruch 4, dadurch gekennzeichnet, daß das weitere Filter (18) ein Oberwellenfilter ist.

6. Antennenweiche nach Anspruch 3, dadurch gekennzeichnet, daß das Handfunksende- und -empfangsgerät (29) über einen vierten Anschluß (31) der Antennenweiche (12) mit der Stromversorgung (32) des Fahrzeuges verbindbar ist.

## Claims

1. Combiner (12) whose first terminal (11), which is connected to a vehicle antenna (10), is connected via a low-pass filter (15) to a second terminal (22) of the combiner for the purpose of connecting a radio-frequency receiver (27) for a lower frequency range as well as, via a high-pass filter (17), to a third terminal (23) of the combiner (10), to which a radio transceiver (29) for a higher frequency range is connected, characterized in that a first radio-frequency amplifier (16) is arranged between the radio-frequency receiver (27) and the low-pass filter (15), and a series circuit consisting of a switching device (20) and a second radio-frequency amplifier (19) which can be short-circuited by the switching device is arranged between the radio transceiver (29), which has a relatively low transmitter power, and the high-pass filter (17).

2. Combiner according to Claim 1, characterized in that the switching device (20) is a radio-frequency current relay whose switch (24) short-circuits the second radio-frequency amplifier (19) when the radio transceiver (29) operates in receiving mode.

3. Combiner according to Claim 1 or 2, characterized in that the transceiver (29) is a hand-carried transceiver which is connected to the third terminal (23) of the combiner (12) via a detachable electrical connection (23, 28).

4. Combiner according to Claim 1, characterized in that a further filter (18) is provided between the high-pass filter (17) and the second radio-frequency amplifier (19) for the purpose of avoiding interchannel modulation.

5. Combiner according to Claim 4, characterized in that the further filter (18) is a harmonic filter.

6. Combiner according to Claim 3, characterized in that the hand-carried transceiver (29) can be connected to the power supply (32) of the vehicle via a fourth terminal (31) of the combiner (12).

## Revendications

1. Duplexeur d'antenne (12), dont le premier raccord (11), relié à une antenne de véhicule (10), est relié par l'intermédiaire d'un filtre passe-bas (15) à un second raccord (22) du duplexeur d'antenne servant à raccorder un récepteur haute fréquence (27) pour une gamme de fréquence plus basse ainsi que via un filtre passe-haut (17) à un troisième raccord (23) du duplexeur d'antenne (10), auquel est relié un appareil émetteur et récepteur radio (29) pour une gamme de fréquence plus élevée, duplexeur d'antenne caractérisé en ce qu'entre le récepteur haute fréquence (27) et le filtre passe-bas (15), on dispose un premier amplificateur haute fréquence (16) et, entre l'appareil émetteur et récepteur radio ((29) qui présente une puissance d'émission relativement faible et le filtre passe-haut (17), on dispose un circuit qui se compose en série d'un dispositif de commutation (20) et d'un second amplificateur haute fréquence (19) que l'on peut ponter au moyen du dispositif de commutation.

2. Duplexeur d'antenne selon la revendication 1, caractérisé en ce que le dispositif de commutation (20) est un relais d'intensité à haute fréquence, dont l'interrupteur (24) établit la liaison avec le second amplificateur haute fréquence (19) quand l'appareil émetteur et récepteur radio (29) fonctionne en récepteur.

3. Duplexeur d'antenne selon la revendication 1 ou 2, caractérisé en ce que l'appareil émetteur et récepteur radio (29) est un appareil émetteur et récepteur radio à main qui est relié, par une liaison électrique amovible, au troisième raccord (23) du duplexeur d'antenne (12).

4. Duplexeur d'antenne selon la revendication 1, caractérisé en ce qu'entre le filtre passe-haut (17) et le second amplificateur haute fréquence (19), on prévoit un autre filtre (18) pour éviter la modulation intercanal.

5. Duplexeur d'antenne selon la revendication 4, caractérisé en ce que l'autre filtre (18) est un filtre suppresseur d'harmoniques.

6. Duplexeur d'antenne selon la revendication 3, caractérisé en ce que l'appareil émetteur et récepteur radio (29) à main peut être relié au moyen d'un quatrième raccord (31) du duplexeur d'antenne (12) à l'alimentation en courant (32) du véhicule.
